Europäisches Patentamt

European Patent Office

Office européen des brevets

(19)

(11) Publication number: **0 284 111**

**A1**

(12) **EUROPEAN PATENT APPLICATION**

(21) Application number: 88200016.9

(22) Date of filing: 08.01.88

(51) Int. Cl.⁴ **G06F 11/26**

The title of the invention has been amended (Guidelines for Examination in the EPO, A-III, 7.3).

(30) Priority: 28.01.87 CA 528437

(43) Date of publication of application:
28.09.88 Bulletin 88/39

(84) Designated Contracting States:
DE FR GB IT SE

(71) Applicant: **N.V. Philips' Gloeilampenfabrieken**
**Groenewoudseweg 1**
**NL-5621 BA Eindhoven(NL)**

(72) Inventor: **Grizenko, Paul**
c/o INT. OCTROOIBUREAU B.V. Prof.
**Holstlaan 6**
**NL-5656 AA Eindhoven(NL)**

(74) Representative: **Strijland, Wilfred et al**
**INTERNATIONAAL OCTROOIBUREAU B.V.**
**Prof. Holstlaan 6**
**NL-5656 AA Eindhoven(NL)**

(54) **Method, system and test-driver computer for testing a computer and/or associated software.**

(57) A system for testing a computer loaded with a software application program where a test-driver computer, with associated keyboard, is connected and programmed to act as a keyboard for the computer being tested, the test-driver also displaying keystroke identifying symbols or words which may be visually checked to determine keystroke accuracy, the keystroke signals also being recorded in a form suitable for recall for an automated testing procedure. The computer-under-test being programmed to provide handshaking protocol with the test-driver so that keystroke input to the computer-under-test is controlled in accordance with the operational requirements of the computer-under-test and wherein the resultant screen information can be transmitted to the test-driver for recording and/or comparison with a desired result.

# A method for testing a computer and/or associated software, a system comprising a test-driver computer and a computer-under-test for executing the method, and a test-driver computer for use in such system.

## BACKGROUND TO THE INVENTION

The present invention relates to a method for testing operability of a computer and/or associated software, said method comprising the steps of: providing a test-driver computer, providing a computer-under-test and interconnecting said two computers.

The method is especially intended for use in relation to personal computer (PC) apparatus and software wherein the economics are such that only simple and economical testing can be warranted.

The testing of a computer system can be a long drawn out, repetitive and expensive undertaking and it is desirable to reduce the time expended and production delays encountered in marketing computers and software programs therefor. Hereinafter, "computer system" shall mean a computer in conjunction with a software program therefore; the problems related to the testing are especially relevant as regards the testing of the operability of the software.

A method for checking keyboards for operation in conjunction with a computer is known from IBM Technical Disclosure Bulletin, Vol. 27, No. 10A, March 1985, pp. 5623-4, wherein the keyboard is connected to a computer which is loaded with a test program for the keyboard and adapted to operate in conjunction with the keyboard to be tested. The resident or loaded program instructs the operator as to the appropriate key to be pressed in order to follow the test program and continuously checks and instructs until all keys have been tested. At the same time the program provides for checking the result of the actuation of a key against a desired result and errors and descrepancies can be stored for later read out.

In addition to checking keyboards, it is desirable to provide a method for checking a computer, loaded with an application program, for proper operation and results. Now, even if the keyboard is error-free, there can be errors due to improper keyboard operation by the tester, operational errors of the computer or errors in the software. Finding of such errors is presently time-consuming, tedious and expensive. Even assuming the computer-under-test is error-free, the testing of the software may require many software revisions and repeats of a test procedure to ensure that the software is finally substantially error-free.

## SUMMARY TO THE INVENTION

It is accordingly desirable that a high degree of automation be available especially when concerned with the testing of computers, or software therefor, especially destined for the low end of the market, i.e. personal computers and software therefor.

It is accordingly an object of the present invention to provide a method of testing which is economical from the point of view of time and expense.

It is a further object of the invention to facilitate rechecking or repeat of testing in a very simple and time saving manner.

According to one aspect of the invention, it provides a method for testing operability of a computer and/or associated software, said method comprising the steps of:
- providing a test-driver computer that is provided with an input keyboard, a first output port and a first bidirectional port;
- providing a computer-under-test having a keyboard input port and a second bidirectional port;
- connecting said first output port via an interface circuit to said keyboard input port;
- interconnecting said first and second bidirectional ports by means of a two-way communication path;
- loading said test-driver computer with a test application program which carries out at least one of the following functional commands:

(a) transparent operation;

(b) file execute; while converting keystroke input from said input keyboard to output data on said first output port and then by means of said interface circuit to a form emulating keyboard input for being recognized as such by said computer-under-test;
- loading said computer-under-test with an application program as a basis for testing said operability and with a handshake control program for providing handshaking communication on said two-way communication path between said test-driver computer and said computer-under-test, said handshaking communcation providing timing control of individual keystroke information from said first output port to said keyboard input port.

The application of the method is advantageous for testing hardware, for testing software in conjunction with the production thereof, but also for the case of modification of existing software.

FURTHER ASPECTS TO THE INVENTION

According to additional advantageous aspects of the invention, at least one of the following additional functional commands is carried out by the test application program:
   (c) record
   (d) file syntax checking
   (e) text file edit
   (f) screen compare.

Furthermore, the method according to the invention, allows for providing that screen information on the screen of the computer-under-test can be transferred to the test-driver computer for checking against a desired screen result.

Still further, the system allows for providing means associated with the test-driver for displaying and storing of the keystroke signals as to their function or character in order that they can be recalled from storage for a visualized automatic test procedure.

In accordance with the invention a debugged, fully operational computer, which may well be of the same design as a computer-under-test, is used as a test-driver computer through which a test program is carried out to check the computer-under-test loaded with a software program.

The invention furthermore relates to a system comprising a test-driver computer and a computer-under-test for executing the method. The invention furthermore relates to a test-driver computer for use in such system. Further advantageous aspects are recited in dependent Claims.

STRUCTURAL DESCRIPTION OF A PREFERRED EMBODIMENT

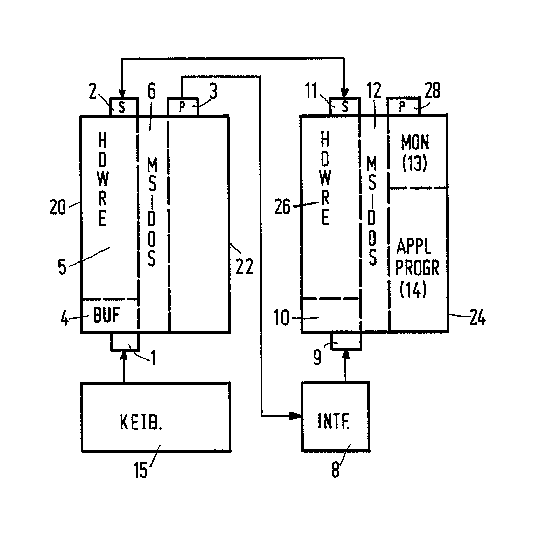

The invention will now be more fully described with reference to the single Figure of the drawing which shows the configuration of an operational test set-up.

Referring to the drawing a test-driver computer is shown as a block 20 having a keyboard input port 1 to which is connected a keyboard 15 of a type required to operate the computer-under-test and as well as the test-driver computer. Block 4 represents a conventional keyboard buffer for the test-driver computer. Block portion 5 represents the hardware or hardwired section (HDWRE) of the test-driver computer. The test-driver computer is provided with at least one serial bidirectional port 2 and a parallel output port 3. In practice, output port 3 would normally be provided for connection to, e.g. a printer. Block portion 6 represents the operational system of the test-driver computer which is a software program loaded from disk (not shown). MS-DOS, in this example, stands for "Microsoft Disk Operation System" produced by Microsoft Corporation. The computer is also provided with basic firmware in the form of a ROM, generally termed BIOS (Basic Input-Output System), and further standard features collectively symbolized by block 22. All these standard features are known to those skilled in the art.

The test-driver is loaded with a software program called a "driver application program", the purpose of which is to provide that the test-driver will interpret keyboard input in the manner desired to carry out the test. Further details of the "driver application program" will be provided subsequently.

The parallel output port 3 of the test-driver is connected through an interface circuit 8 to the keyboard input port 9 of the computer-under-test 24. The purpose of the interface circuit 8 is to change the parallel output signal information, which is determined by the "application program", to a scan code which the computer-under-test will interpret as keyboard input and react accordingly. A particular requirement may be an appropriate translation of the respective voltage levels.

The computer-under-test may correspond substantially with the test-driver. The only difference need be, in accordance with the invention, that the computer-under-test is loaded with a software application program 14, e.g. a word-processing program, and an additional program 13, herein termed "Monitor". This latter program controls the acceptance of keyboard input signals and, when so directed, the transmittal of the screen information of the computer-under-test back to the test-driver computer. This allows for storage and/or comparison with information which represents the correct interpretation of the keyboard input signals as they should appear on the screen of the computer-under-test. The screen information is outputted from the serial port 11 of the computer-under-test to the serial port 2 of the test-driver.

Various parts of the computer-under-test correspond to the test-driver computer such as keyboard buffer 10, hardware section 26, MS-DOS operating system 12 and parallel output port 28 (not used) which again could be suitable for connection to a printer. Both computers should be understood to be provided with their respective own display screen. Although in the foregoing, notably the correspondences between test-dirver computer and the computer-under-test have been stressed, they need not be identical. Notably, they could represent different models of a same model series. However in view of the emulation of the computer-under-test's keyboard by the test-driver computer, the keyboards to the two computers should be identical or at least, correspond closely.

## FUNCTIONAL DESCRIPTION OF THE PREFERRED EMBODIMENT

Hereinafter, a functional description of the system of testing a computer and/or software will now be provided in relation to the test set-up described above and the application programs provided therefor.

The test-driver application program loaded into the test-driver computer must handle at least one of the following functional commands:

    (a) transparent
    (b) file execute.

The functional command "transparent" allows keystrokes to be transferred to the computer-under-test substantially as if the test-driver was the keyboard. Stated otherwise, the computer-under-test functions exactly as if the keyboard wer directly connected to the computer-under-test itself. At the same time, the keystrokes are shown as to their function or character on the screen of the test-dirver. When the test-driver is in functional command "transparent" it will determine whether of not keystrokes are such that it is directed to execute a function, or must leave command "transparent". An editable form of keystrokes is stored on a disk, not shown in the Figure for simplicity. This recording takes place in an MS-DOS file, after interpreting by a program resident in the test-driver computer. Alternatively, use is made of another memory means working in conjunction with the test-driver. As the keystrokes are entered on the test-driver keyboard they are shown as to their function or character on the test-driver screen and recorded for possible future recall and use. The above means that if the "a" key is pressed, the keyboard input, as interpreted by a program resident in the test-driver computer, is recorded in a MS-DOS file of the test-driver computer and the letter "a" is displayed on the screen of the test-driver computer. Simultaneously the letter "a" keystroke signal is transferred to the computer-under-test which displays also the letter "a". However, for instance, when the space bar is pressed, the display on the test-dirver computer screen may be the word "space", or a respective symbol, while the actual spacing takes place on the computer-under-test display screen. The displaying and recording in the test-driver computer is controlled by the application or test program-module 22 in the Figure.

The resultant output signal from the computer-under-test's screen display, may be returned to the test-driver computer for recording and/or comparing with a prerecorded sceen display which represents the correct output display so that a discrepancy alert indication may be provided for pinpointing an operational error.

In functional command "store" the keystroke information and keystroke commands are stored in an operator-selected file. This is in addition to, and in conjunction with the operation described which takes place in functional command "transparent".

The keystroke actions recorded in file unchanged by the test-driver computer can be recalled later and the test be repeated from memory leading to a great saving in time and expense. Furthermore, as the test is being carried out, each individual keystroke can be checked visually for accuracy on the test-driver computer screen and against the operation performed in the computer-under-test, and any errors in operation noted. Such errors could be the result of original operator error, error in the operation of the computer-under-test or in the program loaded thereinto.

In order that the test-driver computer and the computer-under-test can execute a test with data from memory, the feed of keystroke memory information to the computer-under-test must be controlled in accordance with the operating time required for each keystroke signal in the computer-under-test. Accordingly, the computer-under-test must be provided with a progam, herein termed "monitor", which controls the transfer of keystroke signals to the keyboard port buffer of the computer-under-test so that when the keyboard port buffer is empty a new keystroke signal is called for from the test-driver computer and fed to the keyboard port of the computer-under-test.

The functional command "file-execute" performs major tasks: checking each keystroke for syntax errors, performing functions specified in the procedure, sending the keystroke information in a comprehensible form, i.e. scan-code, to the computer-under-test and creating a special code which will assign a specific pictorial representation to each keystroke so that the keystrokes may be edited for correctness, i.e. "shift", "space", etc.

The functional command "file-syntax" is used to check if test files contain syntax errors. These errors if occurring will be displayed on the test-driver computer screen and no signals are sent to the computer-under-test. The test files are standard ASCII files and any ASCII text editor can be used to modify or correct an existing file.

The monitor program provides for handshaking protocol between the computer-under-test and the test-driver computer, comparing files, saving screen content, displaying characters received through communication ports and deleting files.

The monitor program will also check if a keystroke is requested by the application program, e.g. word-processing, that has been loaded into the computer-under-test. The monitor program will instruct the test-driver conmputer, via communication line 15, to forward a next character when the application program so requests.

The "compare screen" function will compare an expected result as retrieved from disk storage that is connected with the test-driver computer, with a results obtained from the computer-under-test screen.

Further functional commands may be provided by the loaded programs as desired to render the test procedure more sophisticated or as required for testing of different software programs. Such changes and other modifications, which do not depart from the spirit and scope of the present invention, are covered by the appended Claims.

The advantages of a system, according to the invention, will be evident. For instance, once an initial test procedure has been correctly carried out and the associated keystroke signals recorded, the keystroke signals taken from memory for a subsequent test are inherently correct - i.e. there is no opportunity for human error to occur. Any error then occurring should represent an error in the computer-under-test operation or in the software loaded into it. Such a system is particularly advantageous when used in conjunction with the production of new software or the modification of existing software.

Another advantage is that neither the test-driver computer, nor the computer-under-test need to be modified hardwarewise. The only hardware required is the interface circuit for converting the keystroke operation results in the test-driver computer to compatible keystroke signal form for transfer to the keyboard port of the computer-under-test. This means that a simple personal computer can be used as a test-driver to test similar computers, i.e. expensive test equipment is not required. Such systems are economical to set up and operate and may be used by either hardware or software production houses.

**Claims**

1. A method for testing operability of a computer and/or associated software, said method comprising the steps of:
- providing a test-driver computer that is provided with an input keyboard, a first output port and a first bidirectional port;
- providing a computer-under-test having a keyboard input port and a second bidirectional port;
- connecting said first output port via an interface circuit to said keyboard input port;
- interconnecting said first and second bidirectional ports by means of a two-way communication path;
- loading said test-driver computer with a test application program which carries out at least one of the following functional commands:
(a) transparent operation;

(b) file execute;
while converting keystroke input from said input keyboard to output data on said first output port and then by means of said interface circuit to a form emulating keyboard input for being recognized as such by said computer-under-test;
- loading said computer-under-test with an application program as a basis for testing said operability and with a handshake control program for providing handshaking communication on said two-way communication path between said test-dirver computer and said computer-under-test, said handshaking communcation providing timing control of individual keystroke information from said first output port to said keyboard input port.

2. A method as claimed in Claim 1, wherein said test application program carries out at least one of the following additional functional commands:
(c) record
(d) file syntax checking
(e) test file edit
(f) screen compare.

3. A method as claimed in Claim 1 or 2, wherein furthermore screen information as displayed by the computer-under-test is transmitted via said two-way communication path to the test-driver computer for comparison with a stored desired result.

4. A method as claimed in Claim 1, 2 or 3, wherein keystroke signals from the keyboard attached to the test-driver computer are thereon displayed and therein recorded as to their character and function for later recall for visualised and automated test procedure.

5. A system for testing operability of a computer and/or associated software, said system comprising:
- a test-driver computer having an input keyboard, a first output port and a first bidirectional port;
- a computer-under-test having a keyboard input port fed by said first output port via an interface circuit and having a second bidirectional port interconnected to said first bidirectional port by means of a two-way communication path, wherein the test-driver is provided with a test application program which carries out at least one of the following functional commands:
(a) transparent
(b) file execute
keystroke input from the said keyboard being convertible from the data outputted from the first output port connected to the interface circuit to a form emulating keyboard input and recognizable by the computer-under-test as keyboard input, the computer-under-test being loaded with an application program with is the basis for the operability test and a further program which provides handshaking communications with the test-driver, via said two-way communication path, to control the timing of the input of individual keystroke information to the computer-under-test.

6. A system as claimed in Claim 5, wherein the test application program includes at least one of the following, additional functional commands:

(c) store/record

(d) file syntax checking

(e) text file edit

(f) screen compare.

7. A system as claimed in Claim 5 or 6, wherein provision is made for transmitting screen information on the computer-under-test via said two-way communication line to the test-driver for comparision with a stored desired result.

8. A system as claimed in Claim 5 or 7, wherein keystrokes from the keyboard connected to the test-driver are displayed and recorded as to their character and function for later recall for a visual, automated test procedure.

9. A system for testing the operability of computers or software adapted therefor comprising, a first test-driver computer provided with an input keyboard, a computer-under-test loaded with an application program and upon which a testing operation is to be performed, one output port of the test-driver conputer being connected through an interface circuit to the keyboard input port of the computer-under-test, an output port of the computer-under-test being connected by a two-way communication path to a similar port on the test-driver, and wherein the test-driver computer is provided with a test application program which provides for depicting on the screen of the test-driver computer keystroke operation characters and function identifications, keystroke input from the said keyboard being converted from the data outputted from the port connected to the interface circuit to a form emulating keybord input and recognizable by the computer-under-test as keyboard input, the computer-under-test being loaded with an application program which is the basis for the operability test and a further program which provides handshaking communication with the test-driver, via said two-way communcation path, to control the timing input of individual keystroke infomation to the computer-under-test.

10. A system as claimed in Claim 9, wherein the screen information produced on the computer-under-test by the converted input and a resident program is forwarded to the test-driver for comparison checking with similar stored screen information.

11. A system as claimed in Claim 9 or 10, wherein the keystroke character and function information, depicted on the test-driver screen is transferred to a storage file from which it may be retrieved for a subsequent automatic computer test in which the retrieved information is forwarded to the computer-under-test under handshaking control provided via the two-way communication path.

12. A system as claimed in any of Claims 5 through 11, wherein the application program is for a word processing operation.

13. A test driver computer for use in testing operability of another computer and/or associated software, said test driver computer comprising an input keyboard, a first output port having interface circuit means, a first bidirectional port, test application means for carrying out at least one of the following functional commands:

(a) transparent

(b) file execute

conversion means including said interface circuit means for converting a first key code from an actuated key to an indication display on a display means and hence to a second key code for at an interface output from said interface circuit means emulating a virtual keyboard for connection to a computer-under-test, storage means for storing a signal representing said first key code for later read out, handshake control means operatively connected to said first bidirectional port for a two-way communication path connectable to said first bidirectional port, and repeat control means for successively reading a sequence of locations of said storage means for thereby producing an output sequence of second key codes at said interface output under timing control by timing signals receivable on said first bidirectional port from said computer-under-test for so automatically repeating a test program.

14. A test-driver computer as claimed in Claim 13 wherein said conversion means comprise a translator for translating a control key code to an indication as a representation of a non-displayable funtion controlled by said control key.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENT ABSTRACT OF JAPAN, vol. 7, no. 176 (P-214)[1321], 4th August 1983; & JP - A - 58 80748 (MITSUBISHI DENKI K.K.) 14-05-1983 * whole document * | 1,3-5,7 -11,13 | G 06 F 11/26 |
| Y | IBM TECHNICAL DISCLOSURE BULLETIN, vol. 27, no. 9, February 1985, pages 5400, 5401; DENISON et al.: "Related products keyboard simulator card" * whole document * | 1,2,5,6 ,9,13 | |
| Y | IBM TECHNICAL DISCLOSURE BULLETIN, vol. 28, no. 12, May 1986, pages 5240-5244; "Test case executor for functional verification of system hardware" * whole document * | 1,2,5,6 ,9,13 | |
| A | EP-A-0 068 093 (IBM) * whole document * | 1-14 | |
| A | IBM TECHNICAL DISCLOSURE BULLETIN, vol. 26, no. 10 B, March 1984, page 5324; BENESKI et al.: "System exercise and monitor test tool" * whole document * | 1,4,5,8 ,9,11, 13 | **TECHNICAL FIELDS SEARCHED (Int. Cl.4)** G 06 F 11/22 G 06 F 11/26 G 06 F 15/20 |

The present search report has been drawn up for all claims

| Place of search | Date of completion of the search | Examiner |
|---|---|---|
| BERLIN | 22-04-1988 | DURAND J. |